# DEMANDE DE BREVET EUROPEEN

(11) **EP 1 221 398 A1**
(43) Date de publication de la demande: **10.07.2002**
(21) Numéro de dépôt: 02075067.5
(22) Date de dépôt: 08.01.2002
(51) Int. Cl.: B60P 1/00

(54) **Poussoir d'éjection, benne à déchargement horizontal équipée d'un tel poussoir, et véhicule équipé d'une telle benne**

(30) Priorité: 08.01.2001 FR 0100444
(71) Demandeur: Cleri Industrie SARL, 42400 Saint-Chamond (FR)
(72) Inventeur: De Rosso, Gérard Marc Constant, 31800 Villeneuve de Rivière (FR)
(74) Mandataire: Richebourg, Michel François

(57) **Abrégé**

Le poussoir d'éjection comprend une face de contact avec les matériaux à décharger, un joint d'étanchéité sur son pourtour en regard des parois de la benne, des moyens de guidage de son déplacement selon la direction longitudinale de la benne.

Ses bords extérieurs présentent une forme périphérique adaptée à la section transversale de la benne et sont cintrés et orientés vers l'arrière de la benne, et sa face de contact présente une forme légèrement concave au centre.

## Description

La présente invention se rapporte au domaine technique des poussoirs d'éjection actionnés par un vérin horizontal et destinés à équiper des bennes à éjection horizontale. Elle vise également lesdites bennes à éjection horizontale, équipées de tel poussoirs. Elle vise encore des remorques, semi-remorques, et véhicules porteurs équipés de telles bennes.

Dans le transport dans des bennes de matériaux en vrac, comme par exemple de l'asphalte ou des blocs de pierre, ou encore des céréales, on a depuis longtemps utilisé des dispositifs permettant un déchargement de la benne dit « par gravité » des matériaux, c'est à dire par élévation progressive de l'avant de la benne au moyen d'un vérin ou autre élévateur.

On a ensuite utilisé des dispositifs permettant le déchargement horizontal de la benne, c'est à dire que le matériau contenu dans la benne est poussé vers l'arrière au moyen d'un dispositif poussoir actionné par un vérin horizontal, le vérin étant disposé entre le dispositif poussoir et l'avant de la benne. L'évacuation des matériaux se fait par l'arrière de la benne, qui est ouverte ou fermée au moyen d'une porte relevable articulée.

On connaît déjà des bennes à éjection horizontale munies de poussoirs d'éjection, qui sont fixées sur le châssis d'un véhicule porteur, d'une remorque ou d'une semi-remorque. Pour simplifier, dans la suite de la demande on désignera par « véhicule » un véhicule porteur motorisé, une remorque ou une semi-remorque.

D'une manière générale, le poussoir se déplace à l'intérieur de la benne le long de sa direction longitudinale, de l'avant vers l'arrière de la benne pour l'opération de déchargement, et de l'arrière vers l'avant pour le retour du poussoir en position rétractée. Le poussoir est guidé au cours de son déplacement par des moyens de guidage, disposés sur le poussoir et/ou sur la benne.

Les poussoirs et bennes de l'art antérieur présentent des inconvénients importants. Avec les dispositifs de déchargement de l'art antérieur, on rencontre régulièrement des difficultés lors du déchargement de certains matériaux, notamment des terres argileuses, des matériaux concassés, qui ont tendance à se compacter pendant leur transport et à adhérer fortement aux parois de la benne lors du déchargement. Un tel comportement des matériaux a pour conséquence que les efforts exercés sur les poussoirs et bennes de l'art antérieur sont très importants. Ces efforts entraînent régulièrement des déformations de la benne, telles que vrillage ou flambage, ainsi que l'endommagement du joint d'étanchéité du poussoir. Les réparations nécessitent des périodes d'immobilisation du véhicule, qui engendrent des surcoûts d'exploitation.

L'invention a pour objet de proposer un dispositif de déchargement: poussoir d'éjection, benne, véhicule, qui ne présente pas les inconvénients des dispositifs de l'art antérieur, qui soit d'une fabrication simple et d'un coût réduit.

Selon un premier aspect de l'invention, le poussoir d'éjection destiné à équiper une benne d'éjection à déchargement horizontal, comprenant une face de contact avec les matériaux à décharger, un joint d'étanchéité sur son pourtour en regard des parois de la benne, des moyens de guidage de son déplacement selon la direction longitudinale de la benne, est caractérisé en ce que ses bords extérieurs présentent une forme périphérique adaptée à la section transversale de la benne et sont cintrés et orientés vers l'arrière de la benne, et en ce que la face de contact présente une forme concave, à concavité orientée vers l'arrière.

Selon un autre aspect de l'invention, la benne à éjection horizontale destinée à être montée sur un châssis de véhicule est caractérisée en ce qu'elle est équipée d'un poussoir conforme à l'invention.

Selon encore un autre aspect de l'invention, le vérin d'actionnement du poussoir est fixé à l'intérieur de la benne, à l'avant de celle-ci.

Selon encore un autre aspect de l'invention, le véhicule est caractérisé en ce qu'il est équipé d'une benne conforme à l'invention. De manière préférée, le châssis du véhicule présente une inclinaison telle que l'arrière de la benne se trouve en position légèrement inférieure par rapport à l'avant de la benne.

L'invention sera mieux comprise au moyen de la description détaillée qui va suivre de modes de réalisation fournis à titre indicatif mais non limitatif, et illustrés au moyen des dessins annexés dans lesquels :
- la figure 1 représente en vue latérale un véhicule équipé d'une benne et d'un poussoir selon l'invention ;
- la figure 2 représente une vue arrière du véhicule de la figure 1, illustrant le profil de la benne et un premier mode de réalisation des moyens de guidage du poussoir d'éjection ;
- la figure 3 illustre en vue arrière analogue à celle de la figure 2 un second mode de réalisation des moyens de guidage du poussoir d'éjection ;
- la figure 4 illustre en coupe transversale une variante selon laquelle la benne est fixée au châssis du véhicule par l'intermédiaire d'un faux châssis ;
- les figures 5 et 6 représentent respectivement en coupe longitudinale et en vue de dessus une partie de la benne comprenant le poussoir et le vérin d'actionnement du poussoir ;
- la figure 7 illustre le joint d'étanchéité du poussoir.

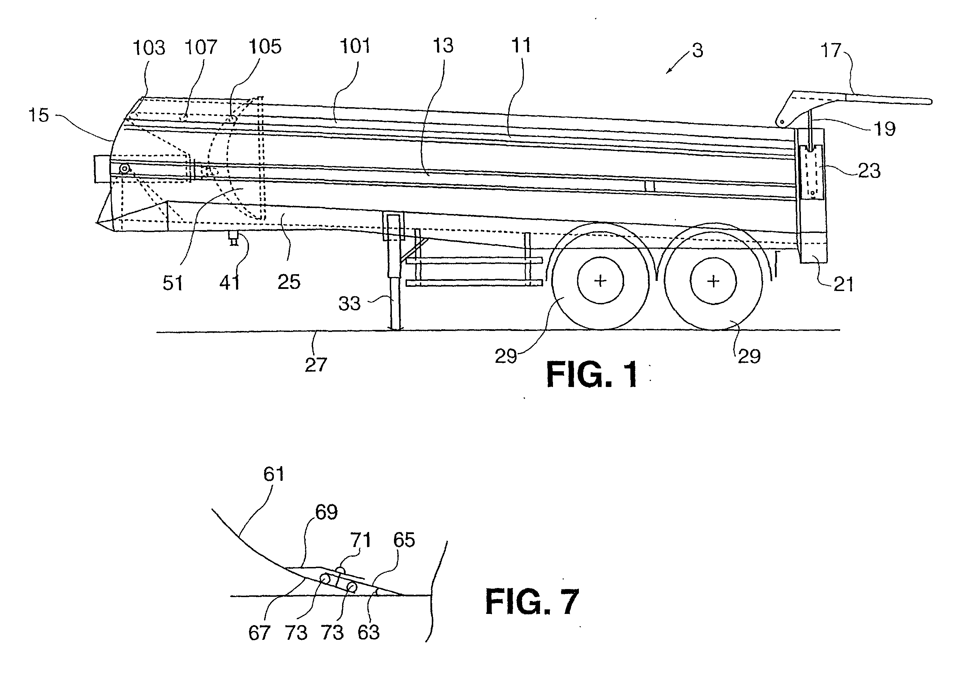

En se référant à la figure 1, le véhicule comprend une benne 3 dans laquelle est installé un poussoir d'éjection 51. La benne 3 conforme à l'invention possède un volume utile s'étendant en moyenne de 5 à 60 mètres cubes, et pouvant même aller jusqu'à 80 ou 100 mètres cubes.

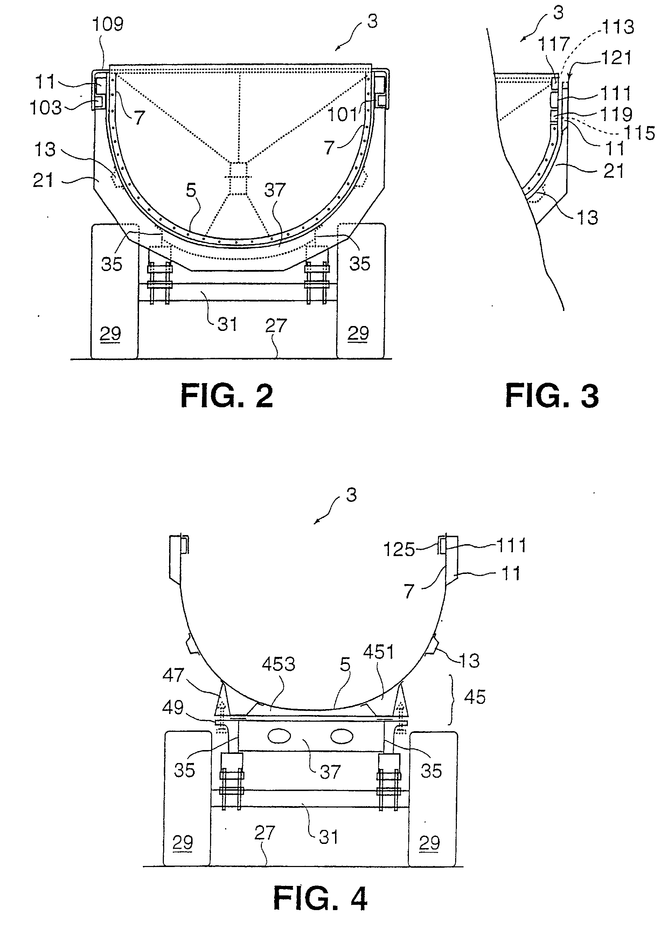

La benne 3 est représentée en vue arrière à la figure 2. Elle est ouverte en partie supérieure et présente une section transversale cintrée 5 en forme de demi-cercle qui se prolonge de part et d'autre vers le haut par un bord rectiligne vertical supérieur 7. Selon une variante non illustrée, la section transversale cintrée 5 est en forme de demi-ovale, cette forme étant plus adaptée au transport des céréales. La paroi de la benne 3 peut être une paroi simple, ou bien une paroi double lorsque les matériaux transportés exercent des efforts de nature à déformer ladite paroi.

La benne 3 comprend des premiers moyens longitudinaux de rigidification 11 et des seconds moyens longitudinaux de rigidification 13, illustrés aux figures 1 à 6.

Les premiers moyens longitudinaux de rigidification 11 ont pour fonction d'empêcher les déformations en partie supérieure de la benne 3. Ils comprennent deux profilés longitudinaux supérieurs et extérieurs 11, fixés respectivement sur la face extérieure de chaque bord supérieur 7 de la benne 3.

Les seconds moyens longitudinaux de rigidification 13 comprennent deux profilés longitudinaux intermédiaires 13 disposés entre le fond de la benne 3 et chaque bord supérieur 7 de la benne 3, sur la face extérieure de celle-ci. Ces profilés 13 sont de préférence pliés en forme de U. Ces seconds moyens longitudinaux de rigidification 13 ont pour fonction d'empêcher les déformations en partie cintrée de la benne 3 et le vrillage des parois de la benne 3, ce qui réduit considérablement les jeux entre le poussoir 51 et les parois de la benne 3 lors du déplacement du poussoir 51.

En partie avant supérieure de la benne 3 est prévu un capot 15, illustré à la figure 1, qui présente une face extérieure convexe bombée en portion de sphère. Le capot 15 a pour fonction de maintenir l'écartement entre les deux profilés supérieurs 11 et les deux profilés intermédiaires 13. Sa forme présente également l'avantage d'offrir une moindre prise au vent lors des trajets.

En partie arrière de la benne 3 est articulée une porte relevable 17, illustrée à la figure 1, dont l'ouverture et la fermeture sont actionnées par deux vérins hydrauliques latéraux 19 orientés selon une direction sensiblement verticale. Selon une variante avantageuse, la porte 17 est en outre équipée de détecteurs de présence par contact, par induction ou par rayons laser. Ces détecteurs, non représentés aux figures, permettent d'éviter une fausse manoeuvre de la commande hydraulique, et d'éviter une éjection intempestive des matériaux lorsque la porte n'est pas ouverte, ce qui aurait sinon pour conséquence d'endommager la porte 17 ou de provoquer un accident corporel d'une personne située à proximité de la benne 3. Ils permettent également d'éviter que la porte 17 soit refermée avant que le poussoir 51 ne soit retourné en position rétractée vers l'avant de la benne 3, ce qui aurait sinon pour conséquence d'endommager le joint d'étanchéité 55 ou le vérin 81 dudit poussoir 51.

Toujours en partie arrière de la benne 3 est disposé un anneau de rigidification 21. Il a pour fonction d'empêcher les déformations à l'arrière de la benne 3 et peut en outre recevoir des moyens de fixation et d'articulation de la porte relevable 17. Il présente également deux logements latéraux 23 pour abriter les vérins latéraux 19 d'actionnement de ladite porte 17.

De façon préférée lorsque la benne 3 présente des dimensions importantes en longueur et/ou en hauteur, un ou plusieurs anneaux supplémentaires de rigidification (non représentés) peuvent être prévus entre l'avant et l'arrière de la benne 3. Ils ont pour fonction de rigidifier les parois latérales de la benne 3, et d'empêcher le flambage de la benne 3 en partie supérieure.

Les figures 1 et 2 illustrent plus particulièrement le cas où le véhicule est une semi-remorque. Celle-ci comprend un châssis 25 qui repose sur le sol 27 (figure 1) au moyen de roues 29 montées sur des ensembles essieux/suspensions 31, de préférence au nombre de deux ou trois et de béquilles 33, de préférence au nombre de deux. Ledit châssis 25 comprend deux longerons longitudinaux 35 sur les extrémités arrière desquels sont fixés les ensembles essieux/suspensions 31. Des traverses de renfort 37, de préférence au nombre de cinq à sept, sont fixées entre lesdits longerons 35, notamment au niveau des ensembles essieux/suspensions 31 et au niveau des béquilles 33. Une traverse supplémentaire 39 en forme de U est prévue vers l'avant du châssis 25, pour l'installation d'une cheville ouvrière démontable 41.

La fixation de la benne au châssis 25 du véhicule (voir figure 1) est réalisée de préférence par soudage ou boulonnage du soubassement de la benne 3 sur ledit châssis 25.

Selon une variante avantageuse, les longerons 35 du châssis 25 présentent une inclinaison de 4 à 6 % par rapport à l'horizontale, la partie la plus basse se trouvant à l'arrière du véhicule. Cette inclinaison a pour avantage de favoriser le déchargement vers l'arrière et d'abaisser le centre de gravité de la semi-remorque.

Selon une variante avantageuse représentée à la figure 4 et destinée à équiper tous types de véhicules, un faux châssis 45 est disposé sous le soubassement de la benne 3. Ce faux châssis 45 comprend deux longerons 451 et des traverses 453 servant d'entretoises entre lesdits longerons 451. Le faux châssis 45 remplit une fonction de renfort du soubassement de la benne 3. Il est adapté pour plaquer parfaitement au soubassement de la benne 3, ce qui permet une fixation sans déformation, du soubassement de la benne 3 au châssis 25 par l'intermédiaire du faux châssis 45.

Les moyens de fixation 47, 49 du faux châssis 45 sur le châssis 25 du véhicule comprennent de préférence le soudage, le boulonnage ou le verrouillage mécanique ou hydraulique. Le châssis 25 peut être indifféremment un châssis de semi-remorque à deux ou trois essieux, ou un châssis de remorque à deux ou trois essieux, ou un châssis de véhicule porteur motorisé.

Un avantage de la benne 3 équipée d'un faux châssis 45 est qu'elle peut être installée sur tous types de châssis 25 de remorques, de semi-remorques ou de véhicules porteurs motorisés qui sont par ailleurs également aptes à recevoir des bennes à déchargement par gravité. Il est donc possible à un utilisateur d'utiliser indifféremment une benne 3 à déchargement horizontal et une benne classique à déchargement par gravité sur un même châssis 25, ce qui réduit considérablement ses coûts d'exploitation.

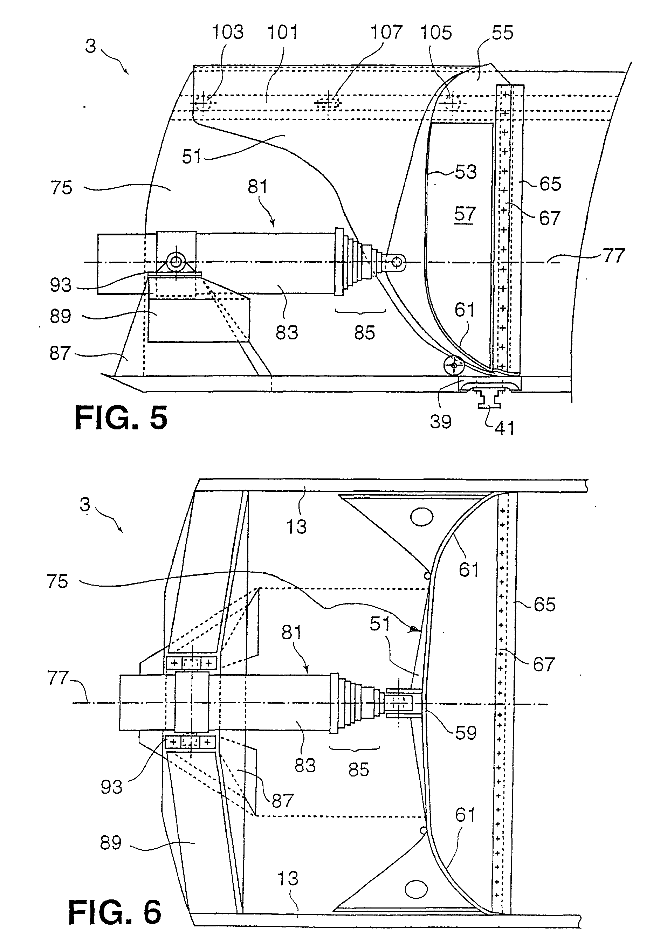

Le poussoir d'éjection 51 est représenté aux figures 5 et 6, respectivement en coupe latérale et en vue de dessus. Il comprend une face de contact 53 avec les matériaux transportés et/ou éjectés et un déflecteur 55 en partie supérieure. Il est de préférence muni d'un doublage de protection 57.

La face de contact 53 présente une forme concave, la concavité étant orientée vers le matériau à éjecter, c'est à dire vers l'arrière de la benne 3. Cette forme concave présente l'avantage de faciliter la pénétration du poussoir 51 dans la masse de matériaux à éjecter.

Le centre 59 de la face de contact 53 présente un grand rayon de courbure, de préférence de l'ordre de 5 mètres, qui lui confère une légère concavité.

La périphérie 61 de la face de contact 53 présente, sur toute sa partie en regard des parois de la benne, un rayon de courbure plus petit, de préférence de l'ordre de 0,7 mètres, qui lui confère une concavité accentuée, et qui prolonge la légère concavité centrale sans discontinuité de la surface. La périphérie de poussoir d'éjection 51 est obtenue par repoussage ou toute méthode analogue.

Le bord libre supérieur de la face de contact 53 du poussoir 51 se prolonge vers le haut par le déflecteur 55. Le déflecteur 55 est de préférence fixé par soudage sur la partie supérieure du poussoir 51. Sa face orientée vers l'arrière de la benne 3 qui est susceptible d'entrer en contact avec les matériaux éjectés est concave.

Lors de l'éjection des matériaux, la résistance desdits matériaux provoque une augmentation du dôme de matériaux sur la face de contact 53 du poussoir 51. Le déflecteur 55 a alors pour fonction d'empêcher les débordements éventuels de matériaux par-dessus le poussoir d'éjection 51 et par dessus les bords supérieurs 7 de la benne 3.

Le doublage de protection 57 du poussoir d'éjection 51 est fixé sur la face de contact 53 du poussoir 51. Il a pour fonction d'absorber les chocs de la face de contact 53 provoqués lors du chargement et/ou du déchargement des matériaux lourds. Il a également pour fonction de protéger la face de contact 53 du poussoir 51 contre les agressions des matériaux abrasifs et/ou corrosifs. Il permet ainsi d'éviter l'endommagement ou la déformation de la structure du poussoir 51.

Le poussoir d'éjection 51 comprend également un joint d'étanchéité 65 sur son pourtour en contact avec les parois de la benne 3, ledit joint 65 étant maintenu sur ledit pourtour au moyen d'un support de joint 67. Le support de joint 67 est de préférence réalisé par une palette plane terminale de la périphérie de la face de contact 53.

De préférence, la palette présente une dimension de 60 à 80 millimètres dans la direction radiale du bouclier et présente un angle d'attaque 63 compris entre 0 et 25 degrés par rapport aux parois intérieures de la benne.

Les formes et/ou dimensions du joint 65 et du support de joint 67 facilitent le décollage des matériaux lors de leur éjection, notamment lorsqu'il s'agit de matériaux ayant un pouvoir d'adhérence important, comme par exemple du bitume. Avec la configuration conforme à l'invention, le joint d'étanchéité 65 résiste aux efforts de poussée sans se retourner. Lesdites formes et/ou dimensions permettent également de garantir une bonne étanchéité entre le poussoir 51 et les parois internes de la benne 3, tout en limitant les frottements du poussoir 61 sur les parois de la benne 3 lors du déplacement avant et/ou arrière du poussoir 51 à l'intérieur de la benne 3.

De manière connue en soi, le joint d'étanchéité 65 est du type monobloc ou d'une seule pièce, et sa fixation sur le support de joint 67 est réalisée par un boulon.

Selon une variante préférée illustrée à la figure 7, le joint d'étanchéité 65 est du type « joint souple» ou « montage fractionné en écaille». Deux bourrelets amortisseurs 73 sont interposés entre le joint 65 et le support de joint 67. L'ensemble est maintenu au moyen d'un couvre-joint 69 fixé sur le support, de préférence par un boulon 71. L'avantage de cette construction est d'augmenter la souplesse du joint 65, ce qui améliore l'ajustage du joint 65 sur la paroi interne 5, 7 de la benne 3 et maintient l'orientation de l'angle d'attaque 63 du joint 65.

Selon une variante avantageuse du poussoir d'éjection illustrée à la figure 5, le poussoir 51 est un poussoir articulé, comprenant deux volets latéraux 75 qui s'articulent autour d'un axe 77 de part et d'autre du corps principal. Lors de la phase d'éjection des matériaux, le poussoir articulé 51 se comporte de la même manière qu'un poussoir 51 non articulé. Lors du retour en position rétractée du poussoir 51, les volets latéraux 75 ont la possibilité de se refermer en direction du plan de symétrie verticale de la benne 3, ce qui minimise les frottements du poussoir 51 contre les parois de la benne 3, et favorise ladite rétractation du poussoir 51.

Le déplacement du poussoir 51 dans la benne est commandé par un vérin horizontal hydraulique télescopique double effet 81.

Le fût 83 du vérin 81 est disposé sur le fond de la benne 3, à l'avant de celle-ci, vers le capot 15. Au fur et à mesure que se déploient ses éléments télescopiques 85 vers l'arrière de la benne 3, le vérin 81 pousse le poussoir 51 vers l'arrière de la benne 3, ce qui a pour effet d'éjecter les matériaux contenus dans la benne 3 entre le poussoir 51 et l'arrière de la benne 3. L'avantage d'une telle disposition du vérin 81 dans la benne 3 réside dans le fait que les contraintes de poids sur le poussoir 51 sont minimisées, et la répartition des charges sur le châssis 25 est améliorée.

Les moyens de fixation du fût 83 du vérin 81 sur le fond de la benne 3 sont illustrés aux figures 4 et 5. Ils comprennent deux supports 87, deux traverses latérales intérieures 89, et deux chapes de fixation 93.

Sur l'exemple illustré aux figure qui représente le cas où le véhicule est un semi-remorque, les supports 87 ont sensiblement une forme de tour pyramidale. Ils sont fixés sur le fond de la benne 3, de part et d'autre du plan de symétrie verticale de celle-ci, et à l'avant de celle-ci.

Les chapes de fixation 93 du vérin 81 sont fixées sur le sommet des deux supports 87, respectivement.

Chaque support 87 est renforcé par une traverse intérieure 89, fixée transversalement entre le haut de la face latérale orientée vers l'extérieur dudit support 87, et la paroi intérieure de la benne 3 au niveau où elle est renforcée par les second moyens longitudinaux de rigidification 13.

Toutes les fixations qui viennent d'être mentionnées pour décrire la fixation du vérin 81, sont de préférence réalisées par soudage.

Ce mode de fixation du vérin 81, et en particulier de la présence des deux traverses latérales intérieures 89, présente l'avantage de maintenir l'écartement des deux parois latérales de la benne 3. Il présente également l'avantage d'équilibrer le efforts de poussée du vérin 81 lors de la phase d'évacuation des matériaux, et donc de réduire les risques de déformation du châssis 25 et/ou de vrillage de la benne 3.

Au cours de son déplacement de l'avant vers l'arrière ou de l'arrière vers l'avant de la benne 3, le poussoir 51 est guidé par des moyens de guidage 101, 103, 105, 107, 109, 111, 113, 115, 117, 119.

Selon le premier mode de réalisation illustré aux figures 1, 2, et 4, les moyens de guidage comprennent des premiers moyens de guidage 101, des deuxièmes moyens de guidage 103, 105 qui coopèrent avec les premiers moyens de guidage 101. Selon une variante optionnelle, mais préférée, les moyens de guidage comprennent en outre des troisièmes moyens de guidage 107, qui coopèrent également avec les premiers moyens de guidage 101.

Les premiers moyens de guidage 101 comprennent des rainures longitudinales 101 de la face extérieure des bords supérieurs 7 de la benne 3. Ces rainures 101 présentent une forme de U, elles sont au nombre de deux et sont de préférence ménagées respectivement sur toute la longueur de chaque profilé longitudinal supérieur extérieur 11 de rigidification. De préférence, chaque rainure 101 est disposée à 20 cm au-dessous du bord libre de la benne 3.

Les deuxièmes moyens de guidage 103, 105 comprennent des galets avant 103, et des galets arrières 105, solidaires du poussoir 51 et qui se déplacent longitudinalement dans les rainures 101. De préférence, le poussoir 51 est équipé d'un galet avant 103 de chaque côté et d'un galet arrière 105 de chaque côté.

Le guidage à quatre galets 103, 105 présente l'avantage d'améliorer la stabilité du poussoir 51 et de maintenir sa position verticale lors de son déplacement longitudinal. De préférence, l'écart entre les galets avant 103 et les galets arrière 105 est d'environ 0.80 à 1.20 m.

Les troisièmes moyens de guidage 107 comprennent des galets intermédiaires 107, solidaires du poussoir 51 qui se déplacent longitudinalement dans lesdites rainures 101. De préférence, les galets intermédiaires 107 sont au nombre de deux, et sont disposés de chaque côté, entre les galets avant 105 et les galets arrière 103, le long de la direction longitudinale de la benne 3.

Les galets avant 103, les galets arrière 105, et les galets intermédiaires 107 sont respectivement reliés au poussoir 51 par des supports en forme de bras coudés 109.

Les galets avant ou arrière 103, 105 parcourent les côtés du U formant les rainures 101, alors que les galets intermédiaires parcourent le fond du U formant les rainures 101. En d'autres termes, l'axe des deuxièmes moyens de guidage 103, 105 est horizontal au cours de leur déplacement dans les rainures 101, alors que l'axe des troisièmes moyens de guidage 107 est vertical au cours de leur déplacement dans les rainures 101. Cette orientation alternée des axes des galets 103, 105, 107 a pour avantage de réduire les risques de flambage de la partie supérieure de la benne 3, et de maintenir un écart sensiblement constant entre le support de joint 67 et le bord supérieur 7 de la benne 3, ce qui réduit encore les risques de retournement du joint d'étanchéité 65 lors du déplacement longitudinal du poussoir 51.

Selon le second mode de réalisation illustré à la figure 3, les moyens de guidage comprennent des premiers moyens de guidage 111, et des seconds moyens de guidage 113, 115, 117, 119 qui coopèrent avec les premiers moyens de guidage 111.

Les premiers moyens de guidage 111 comprennent des rails longitudinaux 111 fixés sur toute la longueur de la face intérieure des bords supérieurs 7 de la benne 3. Ces rails 111 présentent de préférence une forme sensiblement parallélépipédique. Ils peuvent être renforcés par des pièces d'usure 125 visibles sur la figure 4. Ces pièces d'usure 125 peuvent être par exemple réalisées au moyen de deux plaques perpendiculaires soudées par points ou d'une forme en forme de L renversé, soudée par points.

Les seconds moyens de guidage 113, 115, 117, 119 comprennent des galets avant supérieurs 113, des galets avant inférieurs 115, des galets arrières supérieurs 117 et des galets arrières inférieurs 119, tous solidaires du poussoir 51 et qui se déplacent longitudinalement contre les faces supérieures et inférieures respectivement des rails 111. De préférence, le poussoir 51 est équipé d'un galet avant supérieur 113 de chaque côté, d'un galet avant inférieur 115 de chaque côté, d'un galet arrière supérieur 117 de chaque côté, et d'un galet amère inférieur 119 de chaque côté. Le guidage à huit galets 113, 115, 117, 119 présente l'avantage d'améliorer la stabilité du poussoir 51 et de maintenir sa position verticale lors de son déplacement longitudinal.

Le second mode de réalisation qui vient d'être décrit est particulièrement bien adapté aux bennes 3 qui sont équipées d'une bâche destinée à assurer la conservation de la température des matériaux transportés. Sur le dessus de chaque bord supérieur 7 de la benne 3 est fixé un dispositif de guidage 121 de la bâche. Ce dispositif de guidage 121 se présente de préférence sous la forme d'une glissière en C dont les deux bras sont orientés vers le haut et présentent un rabat intérieur.

Les matériaux et dimensions préférés des différents éléments qui ont été décrits ci-dessus sont les suivants :
- benne 3 : acier résistant aux chocs et à l'abrasion, d'une dureté de 400 HB, ou bien acier inoxydable ou aluminium résistant à l'abrasion et à la corrosion, dont l'épaisseur est adaptée à la densité, l'abrasivité et la corrosivité des matériaux transportés.
- châssis 25, faux châssis : acier à haute limite d'élasticité, ou acier inoxydable plié en équerre ou en I, avec une épaisseur de 4 à 5 mm, ou aluminium d'une épaisseur de 10 mm.
- en présence d'un faux châssis 45, on préfère que la benne 3 et/ou le faux châssis 45 soient réalisés en aluminium résistant à l'abrasion plutôt qu'en acier, ce qui permet de réduire considérablement le poids mort du véhicule. La réduction ainsi obtenue peut être de l'ordre de deux tonnes.
- moyens longitudinaux de rigidification 11,13, et pièces d'usure 125 : acier à haute limite d'élasticité.
- capot 15 : tôle.
- traverses 37, 39 : acier à haute limite d'élasticité, d'une épaisseur de 6 mm.
- supports 87 du vérin d'éjection : acier à haute limite d'élasticité, d'épaisseur 6 mm.
- fût 83 du vérin 81 : capacité en huile d'environ 150 I.
- face de contact 53 et déflecteur 55 du poussoir 51 : acier Hardox 400 ou acier à haute limite d'élasticité ou acier inoxydable ou aluminium résistant à l'abrasion, avec une épaisseur adaptée à la nature des matériaux transportés.
- doublage de protection 57 du poussoir 51 : acier à haute limite d'élasticité ou acier inoxydable, avec une épaisseur adaptée à la nature des matériaux transportés ; ou bien plaque de caoutchouc à deux, trois ou six plis de tissu croisé, avec trame polyamide et interface gommé à base de butyl résistant à des températures allant jusqu'à 220 °C ; ou matière plastique du type PTFE résistant à des températures allant jusqu'à 250°C ; ou bien polyamide ; ou bien téflon ; ou bien les dérivés des matériaux ci-dessus ; épaisseur de 5 à 15 mm.
- joint 65 du poussoir 51 : acier à haute résistance à l'abrasion pour le transport de matériaux lourds et agressifs ; ou bien acier inoxydable avec molybdène et titane pour le transport de matériaux extrêmement corrosifs ; ou bien matière plastique de type PTFE résistant à des températures allant jusqu'à 250C ; ou bien polyamide ; ou bien téflon ; ou bien les dérivés des matériaux ci-dessus ; ou bien plaque de caoutchouc à deux, trois ou six plis de tissu croisé, avec trame polyamide et interface gommé à base de butyl résistant à des températures allant jusqu'à 220 °C.

Un poussoir de forme semi-sphérique permet de maintenir les matériaux à éjecter dans l'axe de poussée du bouclier favorisant le glissement de la masse à l'intérieur de la benne 3 et empêche ainsi le débordement de ceux-ci par-dessus les bords supérieurs de la benne. La forme de la face de contact 53 du poussoir 51 ainsi réalisé permet d'alléger la structure arrière du bouclier, qui est opposée à la face de contact 53, permettant ainsi un gain de poids du poussoir 51, tout en conservant une bonne résistance mécanique aux efforts de poussée du vérin.

L'invention n'est pas limitée aux modes de réalisation et variantes qui viennent d'être décrits, et toute adaptation et/ou modification à la portée de l'homme du métier peut être envisagée sans pour autant sortir du cadre de l'invention.

En particulier, des modifications classiques peuvent être apportées au châssis qui a été décrit ci-dessus dans le cas où le véhicule est un semi-remorque, pour l'adapter aux autres types de véhicules concernés par l'invention : remorques, véhicules porteurs motorisés.

Par ailleurs, le déplacement du poussoir peut être commandé par deux vérins hydrauliques télescopiques montés en parallèle, alimentés par un système de répartition de débit et de pression. Cette adaptation est particulièrement adaptée aux bennes de dimensions importantes, typiquement de 80 à 100 mètres cubes.

D'une manière analogue, le poussoir peut être commandé par un ou deux vérins double effet déployant un ou plusieurs losanges extensibles dans le sens longitudinal de la benne. Cette adaptation est particulièrement adaptée aux bennes de faibles dimensions, typiquement ayant un volume de 5 à 15 mètres cubes. Elle a pour avantage de réduire l'espace perdu à l'avant de la benne quand le bouclier se trouve en position rétractée.

On peut également remplacer tout ou partie des galets de guidage par des patins de guidage remplissant la même fonction.

## Revendications

1. Poussoir d'éjection (51) destiné à équiper une benne (3) d'éjection à déchargement horizontal, comprenant une face de contact (53) avec les matériaux à décharger, un joint d'étanchéité (65) sur son pourtour en regard des parois de la benne (3), des moyens de guidage (101, 103, 105, 107, 109, 111, 113, 115, 117, 119) de son déplacement selon la direction longitudinale de la benne (3), **caractérisé en ce que** ses bords extérieurs présentent une forme périphérique adaptée à la section transversale de la benne (3) et sont cintrés et orientés vers l'arrière de la benne (3), et **en ce que** la face de contact (53) présente une forme concave en son centre (59).

2. Poussoir (51) selon la revendication 1, **caractérisé en ce qu'**il comprend un doublage de protection (57) de la face de contact (53).

3. Poussoir (51) selon la revendication 1 ou 2, **caractérisé en ce qu'**il comprend un déflecteur (55) en partie supérieure.

4. Poussoir (51) selon l'une quelconque des revendications 1 à 3, **caractérisé en ce que** le joint d'étanchéité (65) est ajusté au pourtour intérieur des parois de la benne (3) et dirigé vers l'arrière de la benne (3).

5. Poussoir (51) selon l'une quelconque des revendications 1 à 4, **caractérisé en ce que** le joint d'étanchéité (65) présente un angle de pénétration (63) par rapport aux parois intérieures de la benne (3) compris entre 0 et 25 degrés.

6. Poussoir (51) selon l'une quelconque des revendications 1 à 5, **caractérisé en ce qu'**il est actionné par au moins un vérin hydraulique télescopique double effet (81).

7. Poussoir (51) selon l'une quelconque des revendications 1 à 5, **caractérisé en ce qu'**il est actionné par un vérin hydraulique télescopique double effet (81).

8. Poussoir (51) selon l'une quelconque des revendications 1 à 7, **caractérisé en ce qu'**il comprend deux volets latéraux (75) articulés autour d'un corps principal.

9. Poussoir (51) selon l'une quelconque des revendications 1 à 8, **caractérisé en ce que** les moyens de guidage comprennent des galets ou patins extérieurs 103, 105, 107) se déplaçant dans des rainures longitudinales supérieures et extérieures (101) de la benne (3).

10. Poussoir (51) selon l'une quelconque des revendications 1 à 8, **caractérisé en ce que** les moyens de guidage comprennent des galets intérieurs (113,115,117,119) se déplaçant contre des rails longitudinaux supérieurs et intérieurs (111) de la benne (3).

11. Benne (3) à déchargement horizontal destinée à être montée sur un châssis (25) de remorque, de semi-remorque ou sur un châssis (25) de véhicule porteur motorisé, **caractérisée en ce qu'**elle est équipée d'un poussoir (51) selon l'une quelconque des revendications 1 à 10.

12. Benne (3) selon la revendication 11, **caractérisée en ce qu'**elle présente en coupe transversale un profil en demi-cercle (5) rehaussé de part et d'autre d'une portion rectiligne verticale (7).

13. Benne (3) selon la revendication 12, **caractérisée en ce qu'**elle présente en coupe transversale un profil en demi-ovale (5) rehaussé de part et d'autre d'une portion rectiligne verticale (7).

14. Benne (3) selon l'une quelconque des revendications 10 à 13, **caractérisée en ce qu'**elle est munie d'une simple enveloppe.

15. Benne (3) selon l'une quelconque des revendications 10 à 13, **caractérisée en ce qu'**elle est munie d'une double enveloppe.

16. Benne (3) selon l'une quelconque des revendications 10 à 15, **caractérisée en ce qu'**elle comprend sur la face extérieure de chaque bord supérieur un profilé longitudinal supérieur de rigidification (11).

17. Benne (3) selon la revendication 16, **caractérisée en ce que** chaque profilé longitudinal supérieur de rigidification (11) comprend une rainure (101) de guidage du poussoir (51).

18. Benne (3) selon l'une quelconque des revendications 10 à 17, **caractérisée en ce qu'**elle comprend sur sa face extérieure et entre chaque bord supérieur et le châssis (25), un profilé longitudinal intermédiaire de rigidification (13).

19. Benne (3) selon l'une quelconque des revendications 10 à 18, **caractérisée en ce que** chaque vérin d'actionnement du poussoir (51) d'éjection est fixé sur un couple de supports (87), lesdits supports (87) étant fixés à l'intérieur de la benne (3), et à l'avant de celle-ci.

20. Benne (3) selon la revendication 19, **caractérisée en ce que** chaque support est renforcé par une traverse latérale intérieure (89) fixée entre ledit support (87) et la paroi intérieure de la benne (3), à un niveau où celle-ci est renforcée par un profilé longitudinal intermédiaire de rigidification (13).

21. Benne (3) selon l'une quelconque des revendications 10 à 20, **caractérisée en ce qu'**elle comprend un anneau arrière de rigidification (21).

22. Benne (3) selon l'une quelconque des revendications 10 à 21, **caractérisée en ce qu'**elle comprend au moins un anneau intermédiaire de rigidification disposé entre l'avant et l'arrière de la benne (3).

23. Benne (3) selon l'une quelconque des revendications 10 à 22, **caractérisée en ce qu'**elle comprend une porte arrière relevable (17) actionnée par deux vérins latéraux (19) agissant selon une direction sensiblement verticale, et **en ce qu'**elle est munie de détecteurs de présence.

24. Benne (3) selon l'une quelconque des revendications 10 à 23, **caractérisée en ce qu'**elle est équipée d'un faux châssis (45) solidaire de son soubassement, ledit faux châssis (45) étant adapté pour être monté sur le châssis (25) d'un véhicule, ledit montage pouvant être fixe ou amovible selon les utilisations souhaitées.

25. Véhicule pour le transport et l'éjection de matériaux, notamment véhicule porteur motorisé, remorque ou semi-remorque, **caractérisé en ce qu'**il est équipé d'une benne (3) selon l'une quelconque des revendications 11 à 24.

26. Véhicule selon la revendication 25, **caractérisé en ce qu'**il est équipé d'un châssis (25) sur lequel est montée la benne (3), ledit châssis (25) présentant une inclinaison de 4 à 6 % par rapport à l'horizontale, la partie la plus basse étant disposée à l'arrière du véhicule.
